# EUROPÄISCHE PATENTSCHRIFT

(11) **EP 1 073 522 B1**
(45) Veröffentlichungstag und Bekanntmachung des Hinweises auf die Patenterteilung: **13.08.2003**
(21) Anmeldenummer: 99924889.1
(22) Anmeldetag: 29.04.1999
(51) Int. Cl.: B01L 3/00, B01J 19/00

(54) **TRÄGERPLATTE FÜR EINE GEORDNETE AUFNAHME EINER VIELZAHL VON PROBENPARTIKELN**
SUPPORT PLATE FOR RECEIVING A PLURALITY OF SAMPLE PARTICLES IN AN ORDERED MANNER
PLAQUE SUPPORT POUR LOGER DE FA ON ORDONNEE UNE PLURALITE DE PARTICULES D'ECHANTILLON

(30) Priorität: 30.04.1998 DE 19819302
(43) Veröffentlichungstag der Anmeldung: 07.02.2001
(73) Patentinhaber: Graffinity Pharmaceuticals Aktiengesellschaft, 69120 Heidelberg (DE)
(72) Erfinder: SCHMIDT, Kristina, D-69198 Schriesheim (DE); VETTER, Dirk, D-69120 Heidelberg (DE)
(74) Vertreter: Pfeiffer, Rolf-Gerd, Dipl.-Phys.
(86) Internationale Anmeldenummer: EP9903103
(87) Internationale Veröffentlichungsnummer: WO99056877

(56) Entgegenhaltungen:
- WO-A-97/40383
- DE-A- 3 818 614
- FR-A- 2 404 466
- US-A- 2 561 339

## Beschreibung

Die Erfindung betrifft ein Verfahren zur Herstellung einer Trägerplatte zur geordneten Aufnahme einer Vielzahl von Mikropartikeln und danach hergestellte Trägerplatte, die insbesondere im automatisierten Laborbetrieb im Bereich der Analytik sowie der kombinatorischen Chemie zum Einsatz gelangen.

Probenpartikel, auch "Perlen" oder "Beads" genannt, werden seit Jahrzehnten für Separationen und Synthesen im labortechnischen Bereich eingesetzt. Meistens handelt es sich bei diesen Partikeln um Glas- oder Polymerkügelchen, welche Durchmesser von 0,01 mm bis 1 mm, typischerweise um die 0,1 mm, besitzen und trocken oder vorgequollen als loses Schüttgut in einen Behälter gefüllt und dann mit Flüssigkeit umspült werden, wobei zwischen der Festphasenoberfläche der Partikel und der sie umgebenden Flüssigkeit ein Adsorptions- oder Reaktionsprozeß abläuft. Verfahren der Säulenchromatographie (z.B. Gelfiltration), der Säulenextraktion, der Immundiagnostik, der Biomolekülreinigung (z.B. DNA-Reinigung) sowie der homogenen und heterogenen Synthese (z.B. von Oligonukleotiden, Peptiden oder kombinatorischen Substanzbibliotheken) nutzen diese Technik aus.
Neben der Automatisierung und Miniaturisierung von Labortechniken ist deren Parallelisierung von großem Interesse, um einen höheren Probendurchsatz zu erzielen und damit langwierige Verfahren zu beschleunigen. Zu diesem Zweck werden Proben oft in einem Raster angeordnet, so daß die Identität (Herkunft, Beschaffenheit) der Probe mit einer Flächenkoordinate verknüpft werden kann. Diese Koordinaten sind besonders für automatisierte Systeme zur Probenbearbeitung leicht zu erfassen.
Für flüssige Proben sind daher sog. Mikrotiterplatten entwickelt worden, welche Kavitäten in rechtwinkligen Anordnungen von 8 · 12 (96), 16 · 24 (384) oder 32 · 48 (1536) tragen. Die Abmessungen der Kavitäten dieser Probenträger richten sich dabei nach den mit handelsüblichen Geräten (Pipetten) verläßlich dosierbaren Volumina und unterliegen mit dem Fortschreiten der Dosiertechnologie einer kontinuierlichen Miniaturisierung, was durch die beliebige Aliquotierbarkeit (Aufteilung einer Mutterprobe in verschiedene Tochterproben) von Flüssigkeiten vereinfacht wird.
Analog zur Anordnung von flüssigen Proben besteht die Möglichkeit, Probenpartikel in einem zweidimensionalen Raster zu verteilen, wobei als kleinste Einheit einer Schüttgutprobe der einzelne Partikel anzusehen ist.
Eine Aliquotierung losen Schüttgutes erfolgt üblicherweise über das Befüllen einer Kavität mit nachfolgendem Abstreichen des Überschusses. Der Nachteil dieses Verfahren ist, daß es mit einer hohen Ungenauigkeit behaftet ist und einzelne Partikel nicht oder nicht vorhersehbar plaziert werden können.
Für die exakte Partikelzählung gibt es hingegen etablierte Methoden, doch diese sind rein analytischer Natur und erzeugen keine definierten aliquotierten Stückzahlen.
Dem gegenüber sind Verfahren der Durchflußzytometrie geeignet, aus einer Suspension einzelne Zellen oder Partikel definiert zu isolieren. Aufgrund der Aggregations- und Sedimentationstendenz von partikulären Objekten im Größenbereich von 0,1 mm sind diese Verfahren jedoch nicht geeignet, große Stückzahlen zu vereinzeln. Zudem erfordert die Durchflußzytometrie die Aufnahme der partikulären Proben in einer Trägerflüssigkeit, was oftmals nicht wünschenswert ist. Weiterhin werden die Partikel nach der Vereinzelung in einem verhältnismäßig großen Volumen umgebender Flüssigkeit ausgegeben.
Andere Dosiertechniken für Partikel mit stärkerer mechanischer Beanspruchung, wie bspw. die bei der Pulverdosierung übliche Förderung mittels eines Schneckengewindes, können wegen der Gefahr des Zermahlens der Partikel nur in Ausnahmefällen verwendet werden. Hinzu kommt, daß ein partikuläres Schüttgut mit dieser Technologie nicht beliebig allquotiert werden kann und eine einzelne Verteilung der kleinsten Einheit in Form der einzelne Partikel nicht erreicht wird.

Da die Größe der Partikel für ihre Manipulierbarkeit eine wesentliche Rolle spielt, ist sie die Grundlage, auf der bekannte Dosierungs- und Verteilungstechniken beruhen.

Partikel in der Größenordnung von 0,01 mm Durchmesser und darunter lassen sich als Suspensionen mit Flüssigkeitsdosierern, wie z.B. Pipetten aliquotieren, wobei auch hier die bereits genannten Probleme der Partikel in Trägerflüssigkeiten auftreten.
Partikel mit Durchmessern von ca. 1 mm und darüber bewegen sich in kurzen Zeiträumen aufgrund der Gravitation und lassen sich somit durch Einschütten in Kapillaren oder andere Mikromanipulationsverfahren sortieren. Das Problem dieses Verfahren ist, daß mit ihm die einzelne Verteilung der kleinsten Einheit in Form der einzelne Partikel nicht präzise erreicht wird.
Bekannt ist, daß Partikel mit einem Durchmesser im Größenbereich von 0,1 mm ein ungünstiges Verhältnis von Volumen zu Oberfläche besitzen, wodurch ein ungünstiger Einfluß auf die Dosierbarkeit und Verteilbarkeit von Partikeln bewirkt wird. Eine Kugel des Durchmessers von 1 mm besitzt bspw. ein Volumen von ca. 0,5 ml und eine Oberfläche von ca. 3 mm². Hingegen weist eine Kugel des Durchmessers von 0,1 mm ein Volumen von ca. 0,5 nl und eine Oberfläche von ca. 0,03 mm² auf. Da das Volumen proportional zur Masse ist, besitzen die Partikel von 0,1 mm Durchmesser eine für ihre geringe Masse verhältnismäßig große Oberfläche und somit einen verhältnismäßig hohen Reibungswiderstand, was eine Dosierung und Verteilung dieser Partikel besonders erschwert. Dieser Effekt tritt bspw. bei den weit verbreiteten Polymerharzperlen oder hochporösen Gelperlen auf, die zusätzlich wegen ihrer Oberflächenrauhigkeit und elektrostatischen Effekte sehr zur Adhäsion neigen. In Suspensionen hingegen treten diese Adhäsionseffekte weniger stark ausgeprägt auf, jedoch neigen die Partikel hier wiederum zur Sedimentation und lassen sich durch Pipettiervorgänge nur schwerlich über längere Zeiträume exakt dosieren oder verteilen.
Ein besonderes Problem stellt die Haftung der Partikel untereinander dar.
Meistens liegen die Partikel als Aggregate oder Klumpen vor und lassen sich ohne mechanische Einwirkung nicht vereinzeln, so daß der Sortierungsprozeß dieser Partikel in einen Vereinzelungs- und einen Verteilungsschritt zu gliedern ist. Mit den bisher bekannten Techniken kann nicht gewährleistet werden, daß bei diesen beiden Schritten die Partikel mit großer Sicherheit aus ihrer Schüttung abgetrennt, vereinzelt und von der sie transferierenden Struktur zu dem sie empfangenden Objekt bewegt werden. Die Haftkräfte zwischen den Partikeln und den kontaktierenden Teilen der Transferapparatur stellen dabei wiederum, wie bei den vorstehend beschriebenen Beispielen der Polymerharzperlen oder der hochporösen Gelperlen, das Hauptproblem dar.
Bei der bekannten Technologie des Ausstreichens einer verdünnten Partikelsuspension über eine Platte mit einer Vielzahl von Kavitäten besteht der Nachteil, daß die Kavitäten wesentlich größer als die Partikel sein müssen und lediglich eine statistische Befüllung der Kavitäten mit 0 bis 4 Partikeln erfolgt. Diese Variabilität bedeutet Schwankungen im Bereich von 0 bis 400% und ist gerade in Hinsicht auf die Anforderungen im miniaturisierten Labormaßstab für die Bestückung von Kavitäten nicht akzeptabel.

Der Erfindung liegt die Aufgabe zugrunde, eine Trägerplatte für eine geordnete Aufnahme von Probenpartikeln zu schaffen, in die hochpräzise, schnell und mit geringem Aufwand eine exakte und dosierte Verbringung einzelner Probenpartikel ermöglicht ist, wobei die Nachteile des Standes der Technik vermieden werden.

Die Aufgabe wird durch die Merkmale des ersten Patentanspruchs gelöst. Vorteilhafte Ausgestaltungen sind durch die nachgeordneten Ansprüche erfaßt.

Die Erfindung soll nachstehend anhand schematischer Ausführungsbeispiele näher erläutert werden. Es zeigen:
- Fig. 1: einen Ausschnitt aus einem grundsätzlichen Aufbau einer erfindungsgemäßen Trägerplatte in teilweise geschnittener Darstellung,
- Fig. 2: bis 9 verschiedene Ausführungsformen einzelner Kavitäten der erfindungsgemäßen Trägerplatte in einem Längsschnitt,
- Fig. 10a: und 10b weitere Ausführungsmöglichkeiten der erfindungsgemäßen Trägerplatte in einem Längsschnitt,
- Fig. 11: einen Längsschnitt durch eine unbesetzte Kavität und
- Fig. 12: einen Ausschnitt einer erfindungsgemäßen Trägerplatte in Draufsicht.

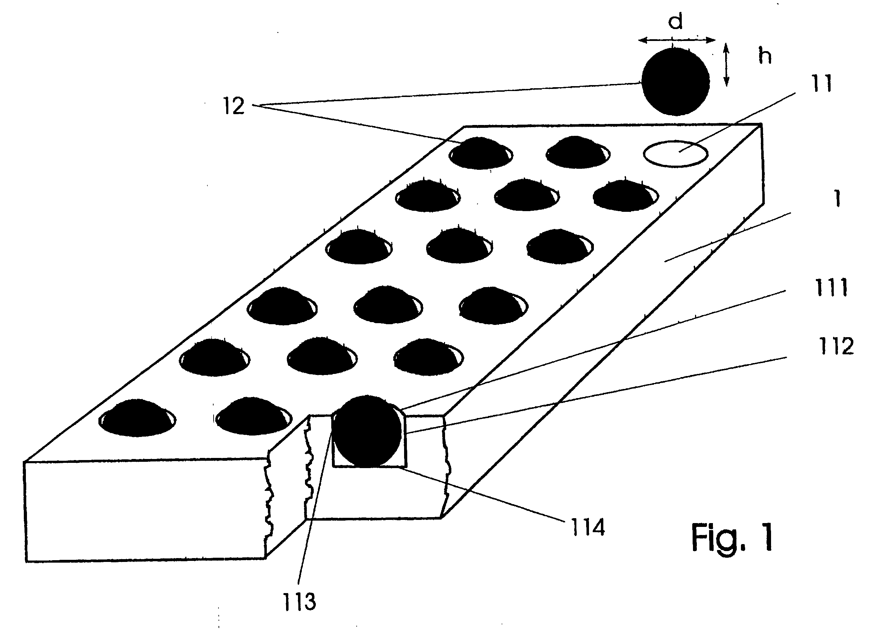

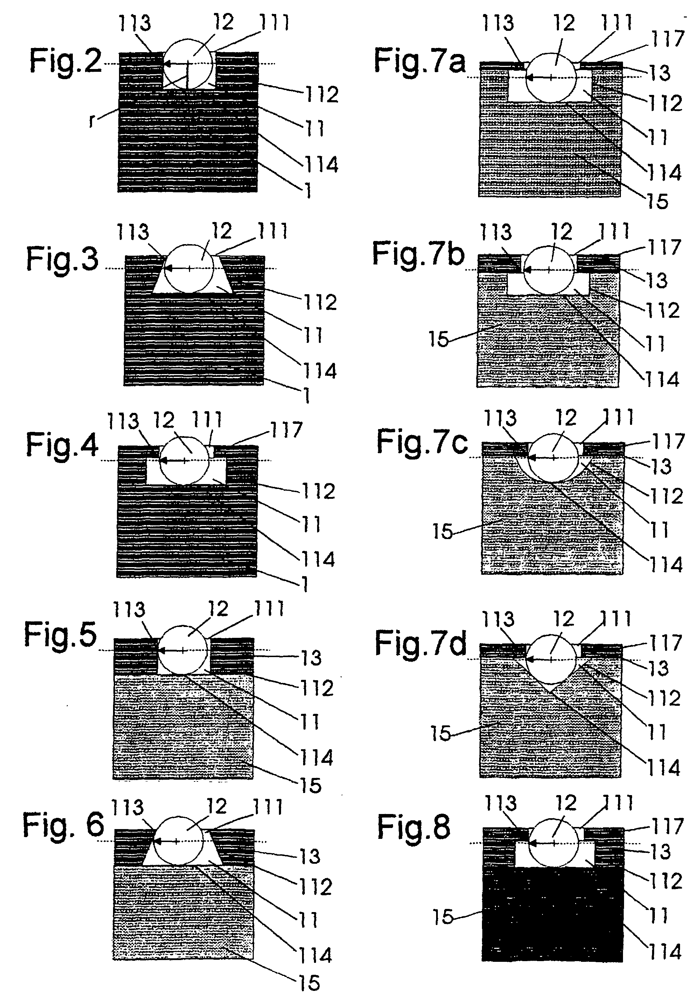

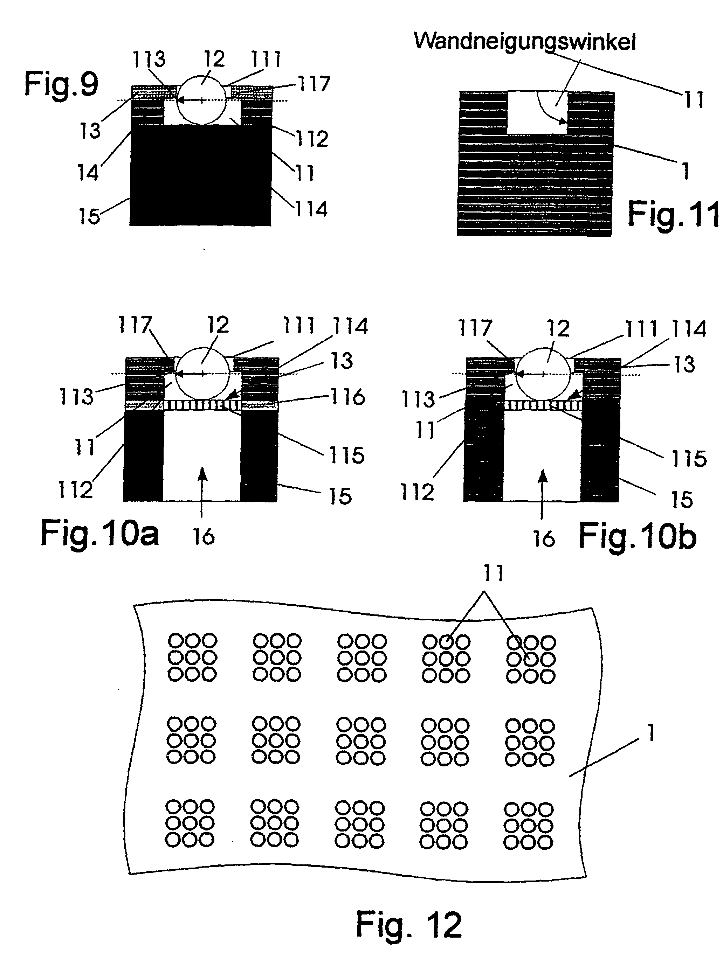

In Figur 1 ist ein Ausschnitt aus einem grundsätzlichen Aufbau einer erfindungsgemäßen Trägerplatte in teilweise geschnittener Darstellung gezeigt, die aus einem Träger 1 besteht, der mit Kavitäten 11 zur Aufnahme lediglich eines Mikropartikels 12 versehen ist. Die Kavitäten 11 sind dabei zueinander in orthogonalen Reihen ausgerichtet und angeordnet, so daß ein regelmäßiges Raster entsteht.
Den Kavitäten 11 sind runde oder quadratische Öffnungen 111 gegeben, deren lichte Weite in der Größenordnung des Durchmessers eines Mikropartikels 12 in trockenem Zustand festgelegt ist und die Tiefe der Kavitäten 11 derart festgelegt ist, daß sich bei horizontaler Translation (vgl. linksgerichtete Pfeile in den Figuren 2 bis 10b) der Mikropartikel 12 ein Kontaktpunkt 113 mit einer Wandung 112 der Kavität 11 ergibt, dessen senkrechter Abstand vom Boden 114 der Kavität größer als der Radius des Mikropartikels 12 ist und die Mikropartikel 12 im eingebrachten Zustand dabei die Öffnung 111 leicht überragen.
Im Beispiel soll bei Durchmessern der Mikropartikel 12 im trockenen Zustand in der Größenordnung vom 90 µm die lichten Weiten der Öffnungen 111 zwischen 100 µm und 150 µm festgelegt sein.
Geeignete Profile der Kavitäten 11 besitzen Neigungswinkel der Wände 112 zwischen 80° und 125°. In Fig. 11 ist dargestellt, wie die Angabe des Wandneigungswinkels zu verstehen ist. Die Wandungen selbst können auch konvex oder konkav gekrümmt sein, was in den Figuren nicht dargestellt ist. Für konvexe Profile muß gleichfalls die Bedingung erfüllt sein, daß der am weitesten innen liegende Punkt der Wand 112, der dann den Kontaktpunkt 113 bilden könnte, auf gleicher Höhe oder oberhalb des geometrischen Mittelpunkts des Mikropartikels 12 liegt.
Bei Profilen der Kavitäten 11, wie sie in den Fig.7a bis 7d dargestellt sind, bildet die obere Stufe einen Überhang 117 und stellt dadurch den mechanischen Kontakt zu dem Mikropartikeln 12 her. Die Höhe dieser Stufe kann im Verhältnis zur unteren verschieden sein. Auch hier gilt, daß Stärke und Profil des Überhangs 117 so auszuführen sind, daß die oben formulierte Bedingung für die Höhe des Kontaktpunkts 113 erfüllt ist.

Die Realisierung der Kavitäten 11 erfolgt durch Anwendung lithografischer und galvanischer Verfahren und Ätztechniken. Dabei besitzen die Kavitäten 11 bspw. bei der Verwendung von 90 µm-Partikeln Abmessungen der Größenordnung von 100 bis 150 µm. Hierdurch kann die lose und trockene Schüttgutprobe durch Einstreichen in das Raster der Kavitäten 11 so aliquotiert werden, daß alle Mikropartikel 12 der Probe im Koordinatennetz der Trägerplatte einzeln und präzise lokalisiert sind. Bei Abmessungen der Rasterplatte von 250 mm · 250 mm können auf diese Art Stückzahlen von 100000 Partikeln mit großer Zuverlässigkeit und Schnelligkeit verteilt werden, wobei die Effizienz der Partikelsortierung überraschend ist.
Darüber hinaus wird bspw. durch eine Tiefe der Kavität 11 von 70 µm bis 50 µm gewährleistet, daß bei Verwendung von Mikropartikeln 12 von 90 µm Durchmesser diese im einsortierten Zustand zwischen 20 bis 40 µm aus der Oberfläche der Trägerplatte 1 herausragen.

Bei den in den Figuren 2 bis 10b beispielhaft dargestellten Längsschnitten durch unterschiedliche Realisierungsmöglichkeiten einzelner Kavitäten 11 weist ein Pfeil in Richtung des Kontaktpunkts 113 bei einer entsprechenden linksgerichteten translatorischen Bewegung eines Mikropartikels 12. Die jeweils dargestellte Strichlinie zeigt die Höhe des geometrischen Mittelpunkts des Mikropartikels 12 relativ zur Kavität 11. Die in den Figuren dargestellten winkligen Ausführungen der Kavitäten sind idealisierte Darstellungen und dienen nur der Veranschaulichung. In Schnitten real ausgeführter Objekte werden sich mehr oder weniger stark abgerundete Kanten finden.

Die in Fig. 1 dargestellte Kavitäten 11 tragende planare Trägerplatte 1 ist aus Metall mittels LIGA-Technik oder Galvanik, aus Kunststoffen mittels Laserbearbeitung oder LIGA-Technik oder Photolithographie, aus Glas oder Silizium mittels Trockenätzverfahren und aus Keramik mittels LIGA-Technik herstellbar.
Bei der LIGA-Technik handelt es sich um die Folge der Verfahrensschritte Lithographie, Galvanoformung und Abformung (vgl. W. Ehrfeld, Microreaction Technology, Springer Verlag 1998),

Bei der Photolithographie werden präzise Muster auf dünnen Filmen von Resistmaterial dargestellt, indem man diese meist mit UV-Strahlung behandelt. Resists basieren meist auf einem polymeren Material, welches empfindlich auf elektromagnetische Strahlung reagiert und dabei seine chemischen oder physikalischen Eigenschaften ändert. Zusätzlich beinhalten Photoresists (oder Photolacke) neben dem Polymer häufig ein Lösemittel, einen Sensibilisator und weitere Additive. Als Polymer kommen beispielsweise PhenolFormaldehyd Novolak Harz, Polyisopren, Poly-(Methylmethacrylat) (PMMA), Poly(Methylisoprenylketon) (PMIPK), Poly-(Buten-1-sulfon) (PBS), Poly-(Trifluorethylchloracrylat) (TFECA) und andere Polymere in Frage. Neben UV-Strahlung können Röntgen- oder Elektronenstrahlen verwendet werden. Lösemittel dienen dazu, den Resist flüssig zu halten, um ihn auf der Waferoberfläche als dünnen Film ausbringen zu können. Sensibilatoren dienen als Starter oder Regulatoren bei der photochemischen Reaktion. Additive können zum Beispiel zur Lichtabsorption dienen. Man unterscheidet zwischen positiven (die bestrahlten Bereiche sind löslich und lösen sich bei der Entwicklung heraus) und negativen Resists, bei denen das Polymer nach Bestrahlung unlöslich ist.

Lithographische Verfahren fanden ursprünglich in der Druckindustrie Anwendung und wurden später von der Elektronikindustrie übernommen und fortentwickelt (vgl. Kapitel 17 "Polymere für die Elektroindustrie" in J.M.G. Cowie, Chemie und Physik der synthetischen Polymere, Vieweg Verlag 1997 oder "Resisttechnik - ein Beitrag der Chemie zur Elektronik" in H. Steppan, G. Buhr, H. Vollmann, Angew. Chem. 94 (1982), 471-485 oder Kapitel 8-10 in P. van Zant, Microchip Fabrication - A Practical Guide To Semiconductor Processing, McGraw-Hill (USA) 1996.)

Die Wandungen der in den Figuren 2 und 3 dargestellten Kavitäten 11 sind mit Neigungswinkeln der Wand 112 zwischen 80° und 125° versehen und lassen sich bspw. auf einer aus einem Metall bestehenden planaren Trägerplatte 1 mittels galvanischer Verfahren erzeugen. Ebenso ist eine in Fig. 4 dargestellte Kavität 11, die mit einem Überhang 117 versehen ist, erzeugbar.

In den Figuren 5 und 6 sind Kavitäten 11 dargestellt, die einen zweischichtigen Aufbau des Trägers 1, bestehend aus einer oberen Schicht 13 sowie einer unteren Schicht 15, aufweisen. Die jeweiligen Wandungsausbildungen entsprechen dabei den Ausbildungen nach den Figuren 2 bzw. 3. Die obere Schicht 13 kann dabei aus einem Metall mittels Galvanik oder aus einem Kunststoff mittels Photolithographie generiert werden, wobei das Material der unteren Schicht 15 frei wählbar ist. Vorzugsweise findet in diesem Beispiel ein Leiterplattenbasismaterial aus einem Epoxypolymer-Glasfasergewebeverbund für die untere Schicht 15 Verwendung.
Ebenso liegt es im Rahmen dieses Ausführungsbeispiels für die obere Schicht 13 einen mittels Fotolithografie strukturierten Kunststoff einzusetzen, wobei das Material der unteren Schicht 15 beliebig wählbar ist, bzw. die obere Schicht 13 aus Silizium zu fertigen und mittels Naßätzverfahren zu strukturieren, wobei das Material der unteren Schicht 15 ein Glas ist, bzw. die obere Schicht 13 aus Metall besteht und mittels galvanischer Verfahren aufgebaut wird, wobei das Material der unteren Schicht 15 beliebig wählbar ist.

In den Figuren 7a bis 7d sind ebenfalls zweischichtige Aufbauten vorgesehen, wobei der wesentliche Teil der Kavität durch das Trägermaterial 15 umfaßt ist und die obere Schicht 13 des Trägers 1 einen Überhang 117 über der in die untere Schicht 15 des Trägers 1 eingearbeiteten Kavität 11 bildet. Die Schichten 13 und 15 lassen sich dabei mittels galvanischer Verfahren oder Abscheiden bzw. Aufschleudern von Polymeren auf einer metallischen Schicht aufbauen. Die Schicht 15 kann auch mittels isotroper oder anisotroper Naßätzverfahren in Silizium hergestellt werden, wobei die Schicht 13 sowohl aus Glas oder einem UV-belichtbaren Polymer bestehen kann. Oder die genannten Schichten können mittels Naßätztechnik in Silizium auf Glas hergestellt werden.

In Fig. 8 ist eine Kavität 11 mit Überhang 117, vergleichbar mit einer Ausführung nach Fig. 4, hier jedoch in einem Zweischichtaufbau des Trägers 1 dargestellt, wobei die gesamte Kavität 11 mit einem Stufenprofil in einer oberen Schicht 13 des Trägers 1 ausgeführt ist und auf der unteren Schicht 15 des Trägers 1 ruht. Die Schichten 13 und 15 lassen sich dabei aus einem Metall mittels galvanischer Verfahren oder aus einem Kunststoff bzw. einer Keramik mittels LIGA-Technik auf frei wählbaren Basismaterialien erzeugen.

Ebenso können im Rahmen der Erfindung Kavitäten 11 in einem Dreischichtaufbau des Trägers 1 mit einer oberen Schicht 13, einer mittleren Schicht 14 und einer unteren Schicht 15 sowie einem Überhang 117, wie sie bspw. in Fig. 9 dargestellt sind, in einer Schichtfolge Metall (mittels Galvanik) auf Metall (mittels Ätzverfahren) auf einem beliebigen Basismaterial oder in Kunststoff (mittels Photolithographie) auf Metall (mittels Ätzverfahren) auf einem beliebigen Basismaterial erzeugt werden.

Als besonders geeignete Materialien, für die entsprechende Mikrostrukturierungstechnologien bekannt sind, haben sich für den Träger 1 Schichtaufbauten aus der Leiterplattentechnologie (bspw. Kupfer auf Glasfaserlaminat) bewährt. Vorteilhafterweise werden diese Schichtaufbauten durch eine zusätzliche, nicht dargestellte galvanische Goldbeschichtung chemisch passiviert.
Beispielsweise wird auf einem planaren Träger 1 (Glasfaser/Epoxy) eine vorzugsweise metallische Schicht (Kupfer) aufgebracht. Diese Schicht wird mit einer Photoresistfolie beschichtet. Mittels eines Photolithographieprozesses werden runde Kavitäten 11 mit dem Durchmesser der Mikropartikel 12 oder wenig größer belichtet. Nach dem Herauslösen der belichteten Bereiche der Photoresistfolie wird die darunterliegende Metallschicht geätzt. Dabei wird die Folie unterätzt und damit eine bspw. die in Fig. 9 dargestellte Geometrie erzeugt. Die Tiefe des Schichtaufbaus aus Metallschicht und Folienresist kann je nach Durchmesser der Mikropartikel 12 und/oder der gewünschten Einbringtiefe der Mikropartikel 12 variiert werden.

Ein weiterer Prozeß der Herstellung der gewünschten Kavitäten 11 verwendet die galvanische Abscheidung von Metallen. In diesem Fall wird auf einer metallischen Unterlage, die als Startschicht für die galvanische Abscheidung dient, eine Photoresistfolie aufgebracht und so strukturiert, daß nur runde Felder, die den Durchmesser der Öffnung 111 der gewünschten Kavität 11 aufweisen, stehenbleiben. In einem galvanischen Bad wird eine Schicht an den Stellen aufgebaut, an denen sich kein Resist auf der Startschicht befindet. Nach einer ersten galvanischen Abscheidung einer unteren Schicht 15 des Trägers 1 wird eine obere Schicht 13 auf der unteren Schicht 15 weiter abgeschieden. Die obere Schicht 13, die ein anderes Material als die untere Schicht 15 darstellt, dient nach dem Lösen der Strukturen der Photoresistfolie als Ätzmaske die untere Schicht 15, um z. B. die Startschicht unterhalb der vorherigen Photoresistfolie wegzuätzten. Damit wird die Kante der oberen Schicht 13 geringfügig unterätzt, um damit bspw. eine der in Fig. 7a dargestellten Kavität 11 mit Überhang 117 herzustellen. Bei Verwendung einer Photoresistfolie mit genau der Schichtdicke, die auch die Tiefe der Kavitäten 11 haben sollen, genügt ein einmaliger Galvanikprozeß. Die entstehenden Kavitäten 11 weisen dann senkrechte Wände 112 auf.

Eine weitere Technologie zur Herstellung von Kavitäten 11 mit runden Öffnungen 111 und weitgehend senkrechten Wänden 112, wie sie in Fig. 2 gezeigt sind, nutzt die Strukturierung von Trägern 1 in Form von photosensiblem Glas. Mittels einer Photoschablone werden alle gewünschten Strukturen gleichzeitig im Glas belichtet und die belichteten Gebiete in einem nachfolgenden Temperprozeß kristallisiert. Diese kristallinen Bereiche können dann in verdünnter Flußsäure geätzt werden. Die Tiefe der geätzten Bereiche kann je nach Durchmesser der Mikropartikel 12 und gewünschter Einbringtiefe dieser durch die Ätzzeit eingestellt werden. Mit diesem Verfahren lassen sich kleinste Kavitäten 11 von 10 µm mit einem Wandneigungswinkel von über 87° herstellen.

In Trägern 1, bestehend aus Polymeren lassen sich auch Kavitäten 11 mit senkrechten Wänden 112, wie sie in Fig. 2 dargestellt sind, durch Laserablation herstellen. Der Vorteil der Laserablation gegenüber Laserabtragsverfahren, die die Materialien über die Phasen Schmelzen und Verdampfen bearbeiten, ist die Fertigung von Kavitäten 11 ohne Randaufwölbung oder Ablagerungen. Mit diesem Verfahren lassen sich durch Verwendung von Blenden gleichzeitig mehrere Kavitäten 11 herstellen, jedoch ist der Bereich begrenzt auf wenige Quadratzentimeter. Somit erfolgt die Bearbeitung des gesamten Trägers 1 seriell. Für die Bearbeitung eines Trägers 1 von 250 · 250 mm² mit 100000 Kavitäten 11 kann die Bearbeitung mit einem Excimerlaser bis zu acht Stunden dauern. Für die Fertigung sehr großer Stückzahlen der beschriebenen Kavitäten 11 tragenden Träger 1 kann auch die LIGA-Technik verwendet werden. Dabei werden in eine PMMA-Schicht mittels Belichtung durch Synchrotronstrahlung oder Laserlicht senkrechte Löcher hergestellt. In einem Galvanikprozeß werden diese Löcher von einer leitfähigen Platte startend mit Metall aufgefüllt. Die PMMA Schicht wird entfernt und die galvanisch hergestellte Platte wird als Mutterplatte zum Abformen von polymeren Materialien verwendet.

Die Herstellung von Kavitäten 11, deren obere Öffnung 111, wie in Fig. 3 und 6 dargestellt, kleiner ist als der Boden 114, kann bspw. mit Hilfe von anisotrop geätztem Silizium, verbondet mit Glas realisiert werden. Die Dicke des Siliziumwafers muß dann genau der erforderlichen Tiefe der Kavität 11 entsprechen. Durch einen photolithographischen Prozeß werden in eine Siliziumdioxid- oder Siliziumnitridschicht auf dem Silizium quadratische Kavitäten 11 eingebracht, deren Kantenlänge nur wenig größer (im Bereich von 10 µm bis 50 µm) ist als der Durchmesser der verwendeten Mikropartikel 12. In einem anisotropen Ätzprozeß werden durchgängige Kavitäten 11 hergestellt, die nach unten verjüngend verlaufen und einen Neigungswinkel der Wand 112 von 125 Grad aufweisen. Die so entstandenen Kavitäten 11 können zum Einfangen der Mikropartikel 12 verwendet werden, indem die geätzte Siliziumscheibe mit der bisherigen Oberseite auf einen Glaswafer gebondet wird. Damit entsteht eine Kavität 11, wie sie in Fig. 6 dargestellt ist. Durch gängige andere Ätztechniken, die sich nicht an der kristallografischen Struktur orientieren, ist es ebenfalls möglich, den gewünschten Kavitäten 11 die oben beschriebene kreisrunde Form in Draufsicht zu geben. Die hier beschriebene Ausführung stellt bezogen auf die zum Einsatz gelangenden Materialien keine Beschränkung der Erfindung dar. Grundsätzlich sind für den Träger 1 alle Materialien geeignet, die die Einbringung von Kavitäten 11 mit sich zur Befüllungsrichtung leicht verjüngenden Querschnitten erlauben und die für die vorgesehenen Anwendungsfälle inert sind. Insbesondere kann dies auch durch eine durchgängig auf dem Träger 1 aufgetragene Schicht in Form von Fotoresist erfolgen.

Nach neuesten Entwicklungen in der Flüssigkeitsdosierung sind Einzeltropfen generierbar, die in ihrem Volumen ungefähr dem der hier diskutierten 0,1 mm-Durchmesser der Mikropartikel 12 entsprechen. Somit können die Mikropartikel 12 in dem beschriebenen Träger 1 individuell mit Flüssigkeit benetzt werden, ohne daß es zu einem Übersprechen zwischen den Kavitäten 11 kommt.
Weiterhin ist es mit dem die beschriebenen Kavitäten 11 tragenden Träger 1 möglich, nicht nur ein Aliquot sondern die Gesamtheit einer Schüttgutprobe in Form der Mikropartikel 12 vollständig zu vereinzeln. Dies ist besonders für bioanalytische Fragestellungen von Interesse, bei denen die Mikropartikel 12 bereits durch vorangestellte Verfahren ("split/mix -Synthese) diversifiziert wurden.
Die präzise Lokalisierung einer Vielzahl von Mikropartikeln 12 erlaubt es, eine Einzelmanipulation, wie in der automatisierten Bestückungstechnologie üblich, einzusetzen. Diese "pick and place" Operationen werden dadurch ermöglicht, daß die Mikropartikel 12 bereits vereinzelt und präzise positioniert in einer Rasteranordnung oder linienförmig aufgereiht auf dem Träger 1 vorliegen.
Zusätzlich ist es möglich, in solchen Transferschritten nicht nur einzelne Mikropartikel 12 sondern ganze Teilbereiche des Partikelarrangements auf komplementäre Rasterformate umzusetzen. Diese parallele Vorgehensweise ist nicht nur schneller, sondern erlaubt es auch, die Mikropartikel 12 mit den verschiedenen von den Flüssigkeitsprobenträgern vorgegebenen Rastermaßen in Übereinstimmung zu bringen. Dabei können von einer Mutterplatte (mit z.B. 9216 Mikropartikeln 12) ausgehend mehrere Tochterplatten (24 Platten zu je 384 Mikropartikeln 12) angefertigt und mit den Flüssigkeitsprobenträgern im entsprechenden 384er Raster in Verbindung gebracht werden. Derartige Transferverfahren sind in der Bestückungstechnologie bekannt und beruhen üblicherweise auf dem Einsatz adhäsiv beschichteter Manipulatoren.
Die präzise Lokalisierung der einzelnen Mikropartikel 12 ist auch Voraussetzung für die Herstellung genau bestimmter (abgezählter) Partikelteilmengen. Vorteilhafterweise können solche Aliquote bereits in die Rastergeometrie eingearbeitet werden. Beispielsweise sind auf einer Platte 9216 Felder mit jeweils neun einzelnen, im genannten Raster zusammengefaßte Kavitäten, wie in Fig. 12 dargestellt, angeordnet, wodurch insgesamt 82944 Kavitäten 11 erhalten werden. Die Abstände zwischen den neun Kavitäten 11 in einem Feld (typischerweise 0,15 mm) sind dabei geringer als die Abstände der Felder untereinander (typischerweise 2 mm). Auf diese Art lassen sich Teilmengen von Mikropartikeln 12 leichter zusammenfassen und adressieren.
Die im Raster verteilten Mikropartikel 12 lassen sich auch wie in der sonst üblichen säulenartigen Anordnung mit flüssigen Reagenzien benetzen und umspülen. Die Vereinzelung und Ausrichtung der Mikropartikel 12 bleibt dabei erhalten, wenn die einzelnen Kavitäten 11 entsprechend unterschnittene Geometrien aufweisen, so daß die Mikropartikel 12 beim Quellvorgang durch die Vergrößerung ihres Volumens in den Kavitäten 11 arretiert werden.
Die Ab- oder Zufuhr von Flüssigkeiten kann bspw. auch, wie in Fig. 10a und 10b dargestellt, durch die Böden 114 der die Mikropartikel 12 haltenden Kavitäten 11 erfolgen. Hierfür sind in dem Träger 1 unter den Kavitäten 11, wie in Fig. 10b dargestellt, definierte und präzis lokalisierte Ausnehmungen 115 vorgesehen oder es ist, wie in Fig. 10a dargestellt, eine speziell hierfür vorgesehen Zwischenschicht 116 mit Ausnehmungen 115 eingeführt. Die Ausnehmungen 115 lassen sich mit üblichen mikrostrukturtechnischen Verfahren erzeugen und so einrichten, daß die Mikropartikel 12 von der Siebstruktur zurückgehalten werden und Flüssigkeiten beim Anlegen eines Vakuums abgesaugt werden können, wenn die Unterseite des Trägers 1 mit einem zugeordneten Durchbruch 16 versehen sind.
Eine in diesem Zusammenhang besonders bevorzugte Ausführungsform verwendet ein in der Leiterplattentechnik übliches Basismaterial, insbesondere ein Glasfaser-Epoxydlaminat. Nach Auflösung des Laminatbindemittels ergibt sich die Möglichkeit der Zufuhr bzw. Ableitung von Probenflüssigkeit durch das freigelegte Glasfasergewebe.
Ein weiterer Vorteil des beschriebenen, die Kavitäten 11 tragenden Trägers 1 zur Aufnahme von einzelnen Mikropartikeln 12 ist bspw., daß präparative Reinigungsverfahren drastisch vereinfacht werden können.

Üblicherweise werden Partikel für die Chromatographie in eine Säule verbracht, und die zu trennenden gelösten Bestandteile werden nach Durchquerung der Säule mit Hilfe von Fraktionssammlern aliquotiert und aufgefangen. Bei der Trennung auf der Säule unterliegt die zu trennende Lösung jedoch einer beträchtlichen Verdünnung und die interessierenden Bestandteile in den gesammelten Fraktionen müssen mit erheblichem Arbeitsaufwand eingeengt werden. Bei Verwendung des beschriebenen, die Kavitäten 11 tragenden Trägers 1 zur Aufnahme von einzelnen Mikropartikeln 12 ist es nicht nötig, das Eluat aufzufangen. Statt dessen werden die Mikropartikel 12, welche die interessierende Gemischkomponente adsorptiv oder durch Affinität gebunden haben, selektiv durch die vorangegangen beschriebenen Transferverfahren in Probengefäße für weitere Umsetzungen oder analytische Arbeiten überführt.
Ganz besondere Vorteile entfaltet der beschriebene, die Kavitäten 11 tragende Träger 1 zur Aufnahme von einzelnen Mikropartikeln 12, wenn sehr komplexe Synthese- oder Analyseaufgaben zu bewältigen sind. So ist es bspw. möglich, daß der die Kavitäten 11 tragende Träger 1 in definierter räumlicher Gliederung mit Mikropartikeln 12 unterschiedlicher adsorptiver oder reaktiver Eigenschaften belegt ist. Dadurch kann noch vor weiteren naßbiologischen oder -chemischen Prozeßschritten eine erhebliche Strukturvielfalt eingebracht werden.
Die enormen Vorteile des beschriebenen, die Kavitäten 11 tragenden Trägers 1 zur Aufnahme von einzelnen Mikropartikeln 12 bei der Zusammenstellung von räumlich aufgelösten, biologischen und/oder physikochemischen Eigenschaften liegen in der Flexibilität, mit der unterschiedliche Partikel ausgewählt und arrangiert werden können, in der Qualitätskontrolle der Partikeleigenschaften, da partikuläre Proben herkömmlicherweise in großen Stückzahlen gefertigt werden, gut charakterisiert sind und kaum Varianzen zwischen den Partikeln aufweisen, wenn sie aus einer Charge stammen sowie in der Analysierbarkeit der Einzelpartikel nach erfolgter biologischer oder chemischer Umsetzung, da die Einzelpartikel von Interesse entnommen, untersucht und wieder zurückgelegt werden können, ohne die Integrität der Trägerplatte zu zerstören.

Beispielsweise lassen sich sogenannte Gen- oder Biochips auf diese Art in großen Stückzahlen und guter Reproduzierbarkeit herstellen, indem bereits mit optimierten Gensonden ausgestattete Mikropartikel 12 auf dem Träger 1 in den Kavitäten 11 plaziert und mit der DNA-Probe von Interesse inkubiert werden.
Die beschriebene zweidimensionale Anordnung der Mikropartikel 12 in den Kavitäten 11 ist darüber hinaus bspw. für hochparallele und kombinatorische Verfahren besonders vorteilhaft. Hierbei werden Bereiche des Trägers 1 gleichzeitig oder in Folge mit unterschiedlichen flüssigen Proben benetzt.

### Bezugszeichenliste

- 1 -: Träger
- 11 -: Kavität
- 111 -: Öffnungen
- 112 -: Wand
- 113 -: Kontaktpunkt
- 114 -: Boden
- 115 -: Ausnehmungen
- 116 -: Zwischenschicht
- 117 -: Überhang
- 12 -: Mikropartikel
- 13 -: obere Schicht
- 14 -: mittlere Schicht
- 15 -: untere Schicht
- 16 -: Durchbruch
- r -: Radius eines Mikropartikels

## Patentansprüche

1. Verfahren zur Herstellung einer Trägerplatte zur geordneten Aufnahme einer Vielzahl von Mikropartikeln, wobei die Trägerplatte aus einem Träger (1) mit in einem Raster regelmäßig angeordneten Kavitäten (11) für die Mikropartikel (12) besteht, **dadurch gekennzeichnet, daß** die Kavitäten (11) mit Öffnungen (111) versehen werden, deren lichte Weite größer als der Durchmesser und bis zum 1,7-fachen des Durchmessers der im wesentlichen kugelförmigen Mikropartikel (12) in trockenem oder feuchtem Zustand ist, und daß die Tiefe der Kavitäten (11) dadurch festgelegt wird, daß sich bei horizontaler Translation der Mikropartikel (12) ein Kontaktpunkt (113) mit einer Wandung (112) jeder Kavität (11) ergibt, der auf gleicher Höhe oder oberhalb des geometrischen Mittelpunkts des Mikropartikels (12) liegt, wobei die Mikropartikel (12) einen Durchmesser in der Größenordnung von 0,1 mm haben und der Kontaktpunkt (113) höchstens soweit unterhalb der Trägerplattenoberfläche gebildet wird, daß jede Kavität (11) nur ein Mikropartikel (12) aufnehmen kann.

2. Verfahren gemäß Anspruch 1, **dadurch gekennzeichnet, daß** die Mikropartikel (12) die Öffnung (111) leicht überragen.

3. Trägerplatte, die nach dem Verfahren gemäß Anspruch 1 oder 2 hergestellt worden ist, **dadurch gekennzeichnet, daß** jede Kavität (11) eine Öffnung (111) aufweist, deren Durchmesser größer als der Durchmesser und bis zum 1,7-fachen des Durchmessers eines Mikropartikels ist, und daß der Kontaktpunkt (113) des Mikropartikels (12) mit der Wandung (112) der Kavität (11) sich jeweils auf der Höhe oder oberhalb des geometrischen Mittelpunktes des Mikropartikels (12) befindet

4. Trägerplatte nach Anspruch 3, **dadurch gekennzeichnet, daß** den Wandungen (112) der Kavitäten (11) Wandneigungswinkel zwischen 80° und 125° gegeben sind.

5. Trägerplatte nach Anspruch 3, **dadurch gekennzeichnet, daß** die Wandungen (112) der Kavitäten (11) konkav oder konvex ausgebildet sind.

6. Trägelplatte nach einem der Ansprüche 3 bis 5, **dadurch gekennzeichnet, daß** die Öffnungen (111) kreisrund oder quadratisch ausgebildet sind.

7. Trägerplatte nach Anspruch 3, **dadurch gekennzeichnet, daß** dem Träger (1) ein mehrschichtiger Aufbau gegeben ist.

8. Trägerplatte nach Anspruch 7, **dadurch gekennzeichnet, daß** der mehrschichtige Aufbau des Trägers (1) die Ebene, die die Wandungen (112) und/oder die Ebene, die die Öffnungen (111) beinhaltet, betrifft.

9. Trägerplatte nach Anspruch 8, **dadurch gekennzeichnet, daß** für die unterschiedlichen Ebenen (13, 14, 15) des mehrschichtigen Aufbaus der Trägerplatte (1) unterschiedliche Materialien eingesetzt sind.

10. Trägerplatte nach einem der vorstehenden Ansprüche 3 bis 9, **dadurch gekennzeichnet, daß** die Öffnungen (111) derart ausgebildet sind, daß die Wandungen (112) einen Überhang (117) aufweisen und genannter Kontaktpunkt (113) der Mikropartikel (12) allein im Bereich des Überhangs (117) gebildet ist.

11. Trägerplatte nach einem der vorstehenden Ansprüche 3 bis 10, **dadurch gekennzeichnet, daß** der Boden (114) einer jeden Kavität (11) mit Ausnehmungen oder flüssigkeitsdurchlässigen Bereichen (115) und der unterhalb jeder Kavität liegende Trägerbereich mit je einem Durchbruch (16), zwecks Schaffung eines kavitätenabseitigen Flüssigkeitstransfers, versehen ist

12. Trägerplatte nach Anspruch 11, **dadurch gekennzeichnet, daß** die Ausnehmungen oder flüssigkeitsdurchlässigen Bereiche (115) Bestandteil einer den Kavitätenboden bildenden Zwischenschicht (116) sind.

13. Trägerplatte nach einem der vorstehenden Ansprüche 3 bis 12, **dadurch gekennzeichnet, daß** für den Träger (1) ein metallbeschichtetes Basismaterial, insbesondere ein Glasfaserlaminat, das mit einem Photoresist überzogen ist, in den die Kavitäten (11) eingebracht sind, eingesetzt ist.

14. Trägerplatte nach Anspruch 13, **dadurch gekennzeichnet, daß** das mit dem die Kavitäten (11) beinhaltenden Photoresist beschichtete Laminat zumindest kawitäienseitig mit einer ganzflächigen Metallbeschichtung, insbesondere einer Goldbeschichtung, versehen ist

15. Trägerplatte nach einem der vorstehenden Ansprüche 3 bis 14, **dadurch gekennzeichnet, daß** die maximale lichte Weite der Öffnungen (111) derart bemessen ist, daß die Mikropartikel (12) im feuchten, gequollenen Zustand im Öffnungsbereich geklemmt erfaßt sind.

16. Verwendung einer Trägerplatte nach den vorstehenden Ansprüchen 3-15 für Zwecke der kombinatorischen Chemie.

## Claims

1. A method for the manufacture of a support plate used for receiving a plurality of micro-particles in a regular arrangement, whereby the support plate comprises a support (1) including cavities (11) in a regularly arranged recurring raster for the micro-particles (12), **characterized in that** said cavities (11) are provided with openings (111), the inside width of which has a size being larger and up to the 1.7fold of the diameter of the mainly spherical micro-particles (12) in their dry or wet state (12), and that the depth of said cavities (11) being such determined that a contact point (113) is established with a wall (112) of each cavity (11) at horizontal translation of the micro-particles (12), said contact point being positioned level with or above the geometric center of the micro-particle (12), whereby the diameter of the micro-particles (12) is in the order of 0.1 mm and the contact point (113) is formed maximally as deep under the surface of the support plate as each cavity (11) can only take up one micro-particle (12).

2. Method according to claim 1, **characterized in that** the micro-particles (12) slightly project from out of the openings (111).

3. A support plate manufactured according to claim 1 or 2, **characterized in that** each cavity (11) is provided with an opening (111) the inside width of which has a size being larger and up to the 1.7fold of the diameter of a micro-particle (12), and that the contact point (113) of the micro-particle (12) with the wall (112) of the cavity (11) is positioned level with or above the geometric center of the micro-particle (12)

4. A support plate according to claim 3, **characterized in that** the walls (112) of the cavities (11) are provided with an angle of inclination of between 80° and 125°.

5. A support plate according to claim 3, **characterized in that** the walls (112) of the cavities (11) are designed concave and convex, respectively.

6. A support plate according to any one of claims 3 to 5, **characterized in that** the openings (111) are designed round and square, respectively.

7. A support plate according to claim 3, **characterized in that** support (1) is provided with a multi-layer setup.

8. A support plate according to claim 7, **characterized in that** the multi-layer setup of the support (1) is related to the plane that includes the walls (112) and/or the plane which the includes the openings (111).

9. A support plate according to claim 8, **characterized in that** different materials are used for the different planes (13,14,15) of the multi-layer setup of the support plate (1).

10. A support plate according to any one of claims 3 to 9, **characterized in that** the openings (111) are designed in such a way that the walls (112) are provided with a cantilever (117), and said contact point (113) of the micro-particles (12) is only established in the range of the cantilever (117).

11. A support plate according to any one of claims 3 to 10, **characterized in that** the bottom (114) of each cavity (11) is provided with recesses and ranges (115) permeable to liquids, respectively, and the range of the support lying underneath each cavity (11) with one passage (16) each, for providing a liquid transfer on the off-side of the cavity.

12. A support plate according to claim 11, **characterized in that** the recesses and ranges (115) permeable to liquids, respectively, are part of an intermediate layer (116) forming the bottom of the cavities.

13. A support plate according to any one of the claims 3 to 12, **characterized in that** a metal coated base material is used for the support (1), said base material being, in particular, laminated glass-fibers, which are coated with a photo-resist, into which the cavities (11) are provided.

14. A support plate according to claim 13, **characterized in that** the laminate coated with the photo-resist, which includes the cavities (11), is provided, at least on the side facing the cavities, with an overall metal-coat, in particular, a gold-coat.

15. A support plate according to any one of claims 3 to 14, **characterized in that** the maximal inside diameter of the openings (111) is such dimensioned that the micro-particles (12) in their liquid and swollen state are clampingly engaged in the range of the openings.

16. A support plate according to the preceding claims 3 to 15 for applications in the combinatorial chemistry.

## Revendications

1. Le procédé de fabrication d'une plaque support destinée à la mise en place de manière définie d'une multitude de particules échantillons, la plaque de support étant composée d'un support (1) doté de cavités (11) disposées de manière régulière dans une trame répétitive, pour recevoir les microparticules (12), est **caractérisé en ce que** les cavités (11) sont pourvues d'orifices (111) dont la largeur intérieure étant plus grande, jusqu'à 1,7 fois, que le diamètre des microparticules (12), en règle générale sphériques, à l'état sec ou humide, et que la profondeur des cavités (11) est définie de sorte que, en cas d'une translation horizontale des microparticules (12), se forme un point de contact (113) avec une enceinte (112) entourant toute cavité (11), se trouvant au même niveau ou à un niveau au-dessus du point géométrique de la microparticule (12), les microparticules ayant un diamètre de 0,1 mm et le point de contact (113) pouvant se former à un niveau au-dessous de la surface de la plaque support de sorte que chacune des cavités ne puisse recevoir qu'une seule microparticule (12) à la fois.

2. La plaque support suivant la revendication 1 est **caractérisée en ce que** les microparticules (12) dépassent, de manière saillante, légèrement l'orifice (111).

3. La plaque support réalisée suivant la revendication 1 ou 2 est **caractérisée en ce que** chacune des cavités (11) présente un orifice (111) dont le diamètre est plus grand, jusqu'à 1,7 fois, que le diamètre d'une microparticule et que le point de contact (113) de la microparticule (12) avec l'enceinte (112) de la cavité (11) se trouve situé à une hauteur égale ou supérieure au centre géométrique de la microparticule (12).

4. La plaque support réalisée suivant la revendication 3 est **caractérisée en ce que** les enceintes (112) des cavités (11) forment un angle d'inclinaison de 80° à 125°.

5. La plaque support réalisée suivant la revendication 3 est **caractérisée en ce que** les enceintes (112) des cavités (11) prennent des formes concaves ou convexes.

6. La plaque support réalisée suivant les revendications 3 à 5 est **caractérisée en ce que** les orifices (111) ont une forme circulaire ou carrée.

7. La plaque support suivant la revendication 3 est **caractérisée en ce que** le support 1 se compose de plusieurs couches.

8. La plaque support réalisée suivant la revendication 7 est **caractérisée en ce que** la structure multicouche du support (1) concerne le niveau comprenant les enceintes (112) et/ou le niveau comprenant les orifices (111).

9. La plaque support réalisée suivant la revendication 8 est **caractérisée en ce que** de différents matériaux sont utilisés pour former les différents niveaux (13, 14, 15) de la structure multicouche de la plaque support (1).

10. La plaque support réalisée suivant la revendication 3 à 9 est **caractérisée en ce que** les orifices (111) sont formés de sorte que les enceintes (112) présentent un débordement saillant (117) et que le point de contact (113) des microparticules (12) se forme uniquement dans la zone du débordement (117).

11. La plaque support réalisée suivant la revendication 3 à 10 est **caractérisée en ce que** le fond (114) de chacune des cavités (11) est dotée d'évidements ou de zones perméables aux liquides (115) et que la zone située sur le support au-dessous de chacune des cavités est pourvue d'une percée (16) permettant de reverser le liquide vers l'extérieur des cavités.

12. La plaque support réalisée suivant la revendication 11 est **caractérisée en ce que** les évidements ou les zones perméables aux liquides (115) font partie intégrante d'une couche intermédiaire (116) formant le fond de la cavité.

13. La plaque support réalisée suivant la revendication 3 à 12 est **caractérisée en ce que** pour le support (1), un matériau de base revêtu d'une couche métallique, de préférence d'un laminat de fibre de verre enduit d'un photorésiste dans lequel les cavités sont aménagées.

14. La plaque support réalisée suivant la revendication 13 est **caractérisée en ce que** le laminat enduit d'un photorésiste comprenant les cavités (11) est pourvu, au moins du côté des cavités, et sur toute la surface, d'une couche métallique, de préférence de l'or.

15. La plaque support réalisée suivant les revendication 3 à 14 est **caractérisée en ce que** la largeur intérieure des orifices (111) est dimensionnée de sorte que les microparticules (12) à l'état humide ou gonflé, sont coincées par l'orifice.

16. Application de la plaque support suivant les revendications précédentes 3 à 15 aux fins de chimie combinatoire.
